# EUROPÄISCHE PATENTSCHRIFT

(11) **EP 2 181 001 B1**
(45) Veröffentlichungstag und Bekanntmachung des Hinweises auf die Patenterteilung: **11.09.2013**
(21) Anmeldenummer: 08761410.3
(22) Anmeldetag: 02.07.2008
(51) Int. Cl.: B60C 23/06, B60T 8/172

(54) **VERFAHREN ZUM BETRIEB EINES SENSORS AN ODER IN EINEM FAHRZEUGREIFEN UND SENSORANORDNUNG**
METHOD FOR OPERATING A SENSOR ON OR IN A VEHICLE TYRE AND SENSOR ARRANGEMENT
PROCÉDÉ DE FONCTIONNEMENT D'UN CAPTEUR SUR OU DANS UN PNEU DE VÉHICULE ET DISPOSITIF CAPTEUR

(30) Priorität: 20.08.2007 DE 102007039242
(43) Veröffentlichungstag der Anmeldung: 05.05.2010
(73) Patentinhaber: Robert Bosch GmbH, 70442 Stuttgart (DE)
(72) Erfinder: PANNEK, Thorsten, 70176 Stuttgart (DE); KECK, Marian, 71083 Herrenberg (DE)
(86) Internationale Anmeldenummer: PCT/EP2008/058502
(87) Internationale Veröffentlichungsnummer: WO 2009/024387

(56) Entgegenhaltungen:
- WO-A-01/87647
- WO-A-02/092364

## Beschreibung

### Stand der Technik

Die Erfindung geht aus von einem Verfahren zum Betrieb eines Sensors an oder in einem Fahrzeugreifen nach dem Oberbegriff des Anspruchs 1.

Solche Sensoranordnungen sind allgemein bekannt. Beispielsweise ist aus der Druckschrift WO 02 / 092 364 A2 eine Sensoranordnung bekannt, als Oberbegriff des Anspruchs 1, wobei ein Beschleunigungssensor im Randbereich eines Fahrzeugreifens angeordnet ist und hochfrequente Änderungen einer tangentialen Kraftwirkung auf den Beschleunigungssensor während eines Reifenumlaufs misst. Um die vergleichsweise schnell auftretenden Kraftwirkungsänderungen in dem rotierenden Fahrzeugreifen zu detektieren, ist ein Abtasten des Beschleunigungssensors mit einer ausreichend hohen Abtastrate erforderlich. Nachteilig daran ist, dass eine derartig hohe Abtastrate einen vergleichsweise hohen Energieverbrauch aufweist. Dies ist insbesondere bei batteriebetriebenen und/oder durch Energiewandler betriebenen Beschleunigungssensoren in Fahrzeugreifen von erheblichem Nachteil.

### Offenbarung der Erfindung

Das erfindungsgemäße Verfahren zum Betrieb eines Sensors an oder in einem Fahrzeugreifen und die erfindungsgemäße Sensoranordnung gemäß den nebengeordneten Ansprüchen haben den Vorteil, dass der Sensor mit einem im Vergleich zum Stand der Technik erheblichen geringeren Energieverbrauch bei gleichbleibender Funktionalität oder Messgenauigkeit betrieben wird. Dies wird durch einen periodisch Betrieb des Sensors derart erreicht, dass lediglich in einem relevanten Messbereich, welcher zur Aufnahme der notwendigen Messdaten dient, der Sensor mit einer vergleichsweise hohen und somit energieaufwändigen Abtastrate betrieben wird, während der Sensor in dem übrigen und weniger relevanten Messbereich mit einer energiesparenden niedrigeren Abtastrate betrieben wird. Bevorzugt ist ein Abschalten des Sensors im weniger relevanten Messbereich vorgesehen. Der relevante Messbereich liegt insbesondere im ersten Zeitintervall, während der weniger relevante Messbereich im zweiten Zeitintervall liegt. Da das zweite Zeitintervall in der Regel deutlich länger als das erste Zeitintervall ist, wird besonders vorteilhaft eine vergleichsweise hohe Energieeinsparung erzielt. Bevorzugt ist ein periodischer Betrieb des Sensors, wobei eine Periodendauer aus dem ersten und das zweiten Zeitintervall besteht. Die Periodendauer entspricht folglich im Wesentlichen der Umlaufdauer des Fahrzeugreifens. Die relevanten Messdaten umfassen die Änderungen der Beschleunigungskräfte auf den Sensor beim Übergang eines Sensorreifenabschnitts in eine Reifenaufstandsfläche und aus der Reifenaufstandsfläche heraus. Eine Verarbeitung der Zeitwerte dieser durch das Auftreten vergleichsweise großer Änderungen der Beschleunigungskräfte detektierbaren Übergänge und/oder eine Verarbeitung der Zeitdauer zwischen zwei Übergängen, ermöglicht die Bestimmung der Reifenaufstandsdauer und/oder der Reifenumlaufsdauer. Die vergleichsweise großen Änderungen der Beschleunigungskräfte entstehen im Übergangsbereich dadurch, dass während der Reifenaufstandsdauer im Wesentlichen die Erdanziehungskraft auf den Sensor wirkt und im übrigen Bereich die Wirkung einer Zentrifugalkraft, hervorgerufen durch eine Reifenrotation, auf den Sensor dominiert. Der Sensorreifenabschnitt umfasst einen Abschnitt einer Reifenlauffläche, welche im Wesentlichen in einer radialen Richtung den Sensor überlappt. Die Reifenaufstandsfläche bezeichnet im Sinne der Erfindung einen Kontaktbereich zwischen dem Fahrzeugreifen und einer Fahrbahn, wobei die Reifenaufstandsdauer eine zeitliche Dauer eines Fahrbahnkontaktes eines infinitesimalen Teilbereichs der Reifenlauffläche während eines Reifenumlaufs und die Reifenumlaufsdauer die zeitliche Dauer für einen Reifenumlauf bzw. eine vollständige Rotation des Reifens um 360' bezüglich der Reifenachse umfasst. Die Zeitdauer des zweiten Zeitintervalls wird insbesondere in Abhängigkeit der Reifenumlaufsdauer und der Reifenaufstandsfläche gewählt, so dass bevorzugt das zweite Zeitintervall kürzer als die Reifenumlaufsdauer abzüglich der Reifenaufstandsdauer ist. Dadurch wird in besonders vorteilhafter Weise gewährleistet, dass der Betrieb des Sensors mit der ersten Abtastrate lediglich im weniger relevanten Messbereich erfolgt, während im relevanten Messbereich, d.h. im Übergangsbereich bzw. während der Reifenaufstandsdauer des Sensorreifenabschnitts, ein Betrieb mit der zweiten und insbesondere höheren Abtastrate erfolgt. Insbesondere ist vorgesehen, dass eine permanente Anpassung bzw. Optimierung, insbesondere im Falle von Geschwindigkeitsänderungen, des ersten und des zweiten Zeitintervalls durchgeführt wird, so dass die Energieeinsparung bei gleichbleibender Funktionalität und Messgenauigkeit maximiert wird. In Abhängigkeit der Reifenumlaufsdauer und/oder der Reifenaufstandsdauer ist besonders vorteilhaft eine Bestimmung der Reifenaufstandsfläche, eines Reifenumfangs, der Reifenlauffläche und/oder einer Fluchtgeschwindigkeit der Reifenlauffläche möglich. Besonders bevorzugt ist eine Anpassung der Abtastraten während des Betriebes und/oder eine Detektion (bspw. über Vibrationen) der Reifenumlaufdauer durch weitere Sensoren vorgesehen, so dass insbesondere der Sensor lediglich beim Eintritt in die Reifenaufstandsfläche eingeschaltet wird.

Gemäß einer bevorzugten Weiterbildung ist das erste Zeitintervall kleiner als die Reifenumlaufsdauer abzüglich der Reifenaufstandsdauer und das zweite Zeitintervall größer als die Reifenaufstandsdauer, wobei die Periodendauer im Wesentlichen der Reifenumlaufsdauer entspricht. In besonders vorteilhafter Weise wird somit sichergestellt, dass das zweite Zeitintervall wenigstens im gesamten relevanten Messbereich liegt, während das erste Zeitintervall außerhalb des relevanten Messbereichs angeordnet ist. Dadurch werden die Zeitwerte der Übergänge mit einer vergleichsweise hohen Abtastrate detektiert, während lediglich für die Zeitdauer in der keine Übergänge auftreten die Abtastrate gering oder gleich null ist.

Gemäß einer weiteren bevorzugten Weiterbildung wird der Sensor vor dem periodischen Betrieb mit der Periodendauer für die Dauer eines dritten Zeitintervalls mit einer dritten Abtastrate betrieben, wobei insbesondere die dritte Abtastrate größer als die erste Abtastrate und kleiner als die zweite Abtastrate ist und/oder das dritte Zeitintervall wenigstens eine Reifenumlaufsdauer und/oder wenigstens eine Reifenaufstandsdauer umfasst und bevorzugt der Ermittlung der Reifenumlaufsdauer und/oder der Reifenaufstandsdauer dient. Zur anfänglichen Bestimmung des ersten und/oder des zweiten Zeitintervalls in Abhängigkeit der Reifenaufstandsdauer und/oder der Reifenumlaufdauer, ist die Ermittlung der Reifenaufstandsdauer und/oder der Reifenumlaufdauer in einem dritten Zeitintervall vorgesehen, wobei insbesondere eine vergleichsweise gröberer Ermittlung der Messgrößen mit einer gröberen Abtastrate als die zweite Abtastrate durchgeführt wird. Insbesondere ist bei einem einmaligen Durchlaufen der Reifenaufstandsdauer auch eine grobe Abschätzung der Reifenumlaufdauer möglich, beispielsweise über eine empirische Relation zwischen Reifenumlaufdauer und Reifenaufstandsdauer eines Fahrzeugreifens mit korrektem Luftdruck, deren Verhältnis üblicherweise bei 90 zu 10 liegt.

Gemäß einer weiteren bevorzugten Weiterbildung werden die Zeitintervalle mit unterschiedlichen Abtastraten durch einen weiteren Sensor und/oder durch einen Energiewandler vorgegeben werden. Besonders vorteilhaft wird somit die externe Erkennung der Reifenumlaufdauer über weitere Sensoren und/oder über Energiewandler, bspw. einen Vibrationssensor, realisiert, wobei die Länge der Zeitintervalle in Abhängigkeit dieser extern ermittelten Reifenumlaufdauer bestimmt wird.

Gemäß einer weiteren bevorzugten Weiterbildung wird mittels des Sensors eine Änderung einer Kraftwirkung auf den Sensor und/oder die Zeitdauer zwischen wenigstens zwei Kraftwirkungsänderungen gemessen und eine Speicherung der entsprechenden Zeitwerte durchgeführt, so dass in besonders vorteilhafter Weise mehrere Zeitwerte zur Bestimmung der Reifenumlaufdauer und/oder der Reifenaufstandsdauer miteinander verarbeitet werden.

Gemäß einer weiteren bevorzugten Weiterbildung wird eine Beladungsmessung eines Fahrzeugs, eine Profiltiefenbestimmung des Fahrzeugreifens und/oder eine Zustandsbestimmung einer Fahrbahn durchgeführt, insbesondere in Abhängigkeit der Reifenumlaufdauer und/oder der Reifenaufstandsdauer, wobei im Sinne der Erfindung die Reifenumlaufdauer bzw. die Reifenaufstandsdauer äquivalent zur Reifenumlaufgeschwindigkeit bzw. zur Reifenaufstandsfläche ist.

Ein weiterer Gegenstand der vorliegenden Erfindung ist eine Sensoranordnung zur Durchführung eines erfindungsgemäßen Verfahrens, wobei die Sensoranordnung einen Sensor, einen Zähler und eine Speichereinheit umfasst, wobei wenigstens der Sensor in dem Fahrzeugreifen, bevorzugt in einem Bereich mit einem Radius größer null gegenüber der Fahrzeugreifenachse angeordnet ist. Besonders vorteilhaft ist mit einer derartigen Sensoranordnung eine im Vergleich zum Stand der Technik erheblich energiesparendere Bestimmung von Reifenumlaufdauern und/oder Reifenaufstandsdauern möglich, wobei insbesondere der Sensor die Kraftwirkungsänderungen detektiert und beim Abtasten desselben die jeweiligen Zeitwerte des Zählers in der Speichereinheit abgespeichert werden. Somit ist eine anschließende Weiterverarbeitung der Zeitwerte zur Bestimmung der Reifenumlaufdauern und/oder Reifenaufstandsdauern beispielsweise in einer zentralen Rechnereinheit möglich. Da jeweils nur vergleichsweise große Änderungen der Kraftwirkung detektiert werden, ist bevorzugt die Verwendung eines Analog-Digital-Wandlers zum Auslesen des Beschleunigungssensors mit einer vergleichsweise geringen Auflösung vorgesehen. Somit ist der Energieverbrauch der Sensoranordnung weiter reduzierbar.

Ausführungsbeispiele der Erfindung sind in den Zeichnungen dargestellt und in der nachfolgenden Beschreibung näher erläutert.

### Kurze Beschreibung der Zeichnungen

Es zeigen:
- Figur 1: eine Sensoranordnung gemäß einer beispielhaften Ausführungsform der vorliegenden Erfindung und
- Figur 2: eine graphische Darstellung einer Kraftwirkung auf den Sensor in einer Sensoranordnung gemäß der beispielhaften Ausführungsform.

### Ausführungsform(en) der Erfindung

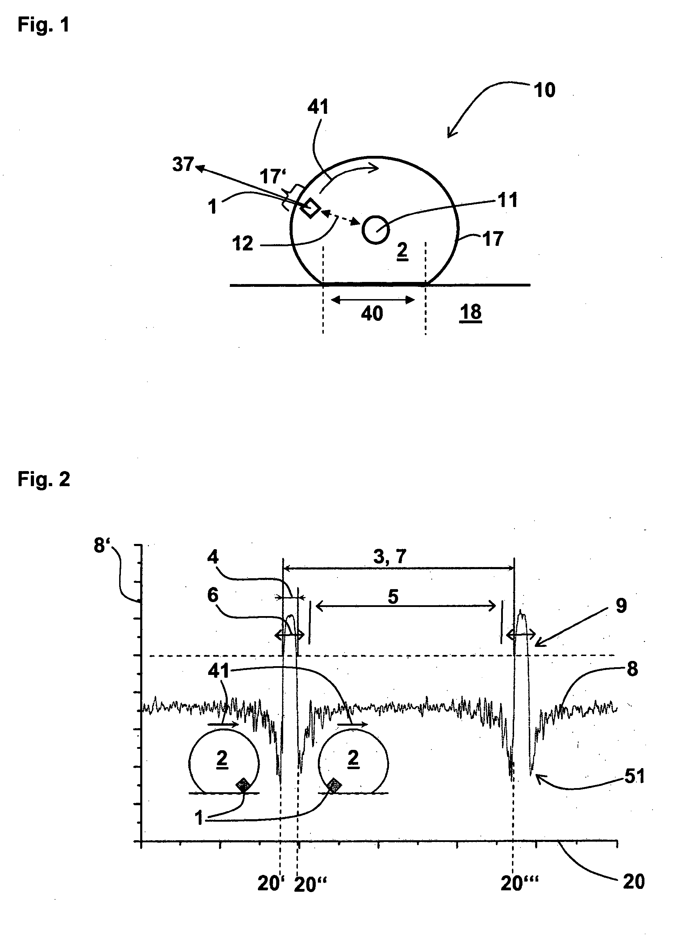

In Figur 1 ist eine Sensoranordnung 10 gemäß einer beispielhaften Ausführungsform der vorliegenden Erfindung dargestellt, wobei ein Sensor 1, insbesondere ein Beschleunigungssensor, in einem Bereich eines Fahrzeugreifen 2 angeordnet ist, welcher gegenüber einer Fahrzeugreifenachse 11 einen Radius 12 größer null aufweist, so dass sich der Sensor insbesondere im Bereich einer Reifenlauffläche 17 befindet. Eine Reifenaufstandsfläche 40 wird durch einen Kontaktbereich zwischen der Reifenlauffläche 17 und einer Fahrbahn 18 gebildet. Ein Sensorreifenabschnitt 17' umfasst einen Abschnitt der Reifenlauffläche 17, welcher im Wesentlichen in einer radialen Richtung, parallel zum Radius 12, den Sensor 1 überlappt. Befindet sich der Sensorreifenabschnitt 17' aufgrund einer Rotation 41 des Fahrzeugreifens 2 um die Fahrzeugreifenachse 11 in der Reifenaufstandsfläche 40, so wirkt im Wesentlichen die Erdanziehungskraft (1g) auf den Sensor 1, während auf den Sensor 1 eine Zentrifugalkraft 37 wirkt, sobald sich der Sensorreifenabschnitt 17' außerhalb der Reifenaufstandsfläche 40 befindet.

In Figur 2 ist eine graphische Darstellung der Kraftwirkung 8 auf den Sensor 1 in einer Sensoranordnung 10 gemäß der beispielhaften Ausführungsform aufgetragen gegen eine Zeiteinheit dargestellt, wobei auf einer Ordinate 8' eine Kraftwirkungsskala und auf einer Abszisse 20 eine Zeitskala aufgetragen ist. Der Verlauf der Kraftwirkung 8 zeigt jeweils bei einem Übergang des Sensorreifenabschnitts 17' in die Reifenaufstandsfläche 40 bzw. aus der Reifenaufstandsfläche 40 heraus eine vergleichsweise große Änderung 9, wobei eine Differenz zwischen dem entsprechenden ersten bzw. zweiten Zeitwert 20', 20" dieser Änderungen 9 eine Reifenaufstandsdauer 4 umfasst. Die Differenz zwischen einem dritten Zeitwert 20"', welcher den nächsten Zyklus eines nachfolgenden Übergangs charakterisiert, und dem ersten Zeitwert 20' umfasst die Reifenumlaufsdauer 3, wobei ein erstes Zeitintervall 5 in einem Intervall liegt, welche der Reifenumlaufsdauer 3 abzüglich der Reifenaufstandsdauer 4 entspricht und wobei ein zweites Zeitintervall 6 im Intervall der Reifenaufstandsdauer 4 liegt und dieses Intervall insbesondere an einem Anfangszeitpunkt und an einem Endezeitpunkt überlappt. Bevorzugt ist eine frühzeitige Detektion der großen Änderungen 9 der Kraftwirkung durch eine Veränderung des Kraftwirkungsverlaufs 8 möglich, wobei der Kraftwirkungsverlauf 8 während dieser Veränderungen einem lokalen Minimum 51 zustrebt. Besonders bevorzugt ist eine Messung der zeitlichen Ableitung des Kraftwirkungsverlaufs 8 vorgesehen. In einem dritten Zeitintervall wird zunächst mit einer vergleichsweise geringen Abtastrate des Sensor 1 die Reifenumlaufsdauer 4 und die Zeiten eines ersten Übergangs t0, eines darauffolgenden zweiten Übergangs t1 und eines auf den zweiten Übergang folgenden dritten Übergangs t3 gespeichert, wobei zur Erhöhung der Genauigkeit die Betrachtung weiterer Übergangszeiten möglich ist. Die Reifenumlaufzeit ergibt sich folglich aus der Differenz des dritten und des ersten Übergangs t3 - t1. Daraus wird nun errechnet, zu welchem Zeitpunkt der Sensorreifenabschnitt 17' erneut in die Reifenaufstandsfläche 40 übergehen wird, wobei der Sensor 1 dann bis zu diesem Zeitpunkt für die Dauer eines ersten Zeitintervalls 5 abgeschaltet wird. Kurz vor diesem Zeitpunkt wird der Sensor 1 mit einer vergleichsweise hohen zweiten Abtastrate wieder eingeschaltet, so dass die Reifenaufstandsfläche 40 über ein zweites Zeitintervall 6 abgetastet wird, wobei weitere Zeitwerte weiterer Übergänge abgespeichert werden. In Abhängigkeit der weiteren Zeitwerte wird wiederum die Reifenumlaufsdauer 3 berechnet und/oder korrigiert und der Sensor 1 für die Dauer eines neu berechneten oder korrigierten ersten Zeitintervalls 5 abgeschaltet. Somit wird die Länge des ersten und zweiten Zeitintervalls 5, 6 permanent angepasst, so dass beispielsweise eine Veränderung der Fahrzeuggeschwindigkeit unmittelbar berücksichtigt wird. Die Differenz zwischen dem ersten Zeitintervall 5 und der Radumlaufsdauer 3 abzüglich der Radaufstandsdauer 4 wird insbesondere in Abhängigkeit der Geschwindigkeit des Fahrzeugs angepasst, damit plötzliche Beschleunigungs- oder Abbremsmanöver des Fahrzeugs nicht zu einem Verlust von Messwerten im zweiten Zeitintervall 6 führen. Alternativ ist ein weiteres anfängliches drittes Zeitintervall vorgesehen, welches lediglich eine Reifenaufstandsdauer 4 detektiert und anschließend unmittelbar den Sensor 1 abschaltet. Die Reifenumlaufdauer 3 wird in diesem Fall lediglich in Abhängigkeit der Reifenaufstandsdauer 5 bestimmt.

## Patentansprüche

1. Verfahren zum Betrieb eines Sensors (1) an oder in einem Fahrzeugreifen (2), insbesondere eines Beschleunigungssensors (1) und insbesondere zur Detektion einer Reifenumlaufsdauer (3) und/oder einer Reifenaufstandsdauer (4), **dadurch gekennzeichnet, dass** der Sensor (1) in einem ersten Zeitintervall (5) eines Reifenumlaufs mit einer ersten Abtastrate und in einem zweiten Zeitintervall (6) des Reifenumlaufs mit einer zweiten Abtastrate betrieben wird.

2. Verfahren nach Anspruch 1, **dadurch gekennzeichnet, dass** die Zeitdauer des ersten und oder zweiten Zeitintervalls in Abhängigkeit einer Reifenumlaufdauer und/oder einer Reifenaufstandsdauer eingestellt wird.

3. Verfahren nach einem der vorhergehenden Ansprüche, **dadurch gekennzeichnet, dass** das erste Zeitintervall (5) größer als das zweite Zeitintervall (6) und die zweite Abtastrate größer als die erste Abtastrate ist, wobei bevorzugt die erste Abtastrate null ist.

4. Verfahren nach einem der vorhergehenden Ansprüche, **dadurch gekennzeichnet, dass** der Sensor (1) periodisch mit einer Periodendauer (7) betrieben wird, welche aus dem ersten und dem zweiten Zeitintervall besteht

5. Verfahren nach einem der vorhergehenden Ansprüche, **dadurch gekennzeichnet, dass** das erste Zeitintervall kleiner als die Reifenumlaufsdauer (3) abzüglich der Reifenaufstandsdauer (4) und das zweite Zeitintervall größer als die Reifenaufstandsdauer (4) ist, wobei die Periodendauer (7) im Wesentlichen der Reifenumlaufsdauer (4) entspricht.

6. Verfahren nach einem der vorhergehenden Ansprüche, **dadurch gekennzeichnet, dass** der Sensor (1) vor dem periodischen Betrieb mit der Periodendauer (7) für die Dauer eines dritten Zeitintervalls mit einer dritten Abtastrate betrieben wird.

7. Verfahren nach einem der vorhergehenden Ansprüche, **dadurch gekennzeichnet, dass** die dritte Abtastrate größer als die erste Abtastrate und kleiner als die zweite Abtastrate ist.

8. Verfahren nach einem der vorhergehenden Ansprüche, **dadurch gekennzeichnet, dass** das dritte Zeitintervall wenigstens eine Reifenumlaufsdauer (3) und/oder wenigstens eine Reifenaufstandsdauer (4) umfasst und bevorzugt der Ermittlung der Reifenumlaufsdauer (3) und/oder der Reifenaufstandsdauer (4) dient.

9. Verfahren nach einem der vorherigen Ansprüche, **dadurch gekennzeichnet, dass** die Zeitintervalle mit unterschiedlichen Abtastraten durch einen weiteren Sensor und/oder durch einen Energiewandler vorgegeben werden.

10. Verfahren nach einem der vorhergehenden Ansprüche, **dadurch gekennzeichnet, dass** mittels des Sensors (1) eine Änderung einer Kraftwirkung (8) auf den Sensor (1) und/oder die Zeitdauer zwischen wenigstens zwei Kraftwirkungsänderungen (9) gemessen wird, wobei bevorzugt eine Speicherung entsprechender Zeitwerte (20) durchgeführt wird.

11. Verfahren nach einem der vorhergehenden Ansprüche, **dadurch gekennzeichnet, dass** eine Beladungsmessung eines Fahrzeugs, eine Profiltiefenbestimmung des Fahrzeugreifens und/oder eine Zustandsbestimmung einer Fahrbahn durchgeführt wird.

12. Sensoranordnung (10) zur Durchführung eines Verfahrens nach einem der vorherigen Ansprüche, **dadurch gekennzeichnet, dass** die Sensoranordnung (10) einen Sensor (1), einen Zähler und eine Speichereinheit umfasst, wobei wenigstens der Sensor (1) in oder an dem Fahrzeugreifen (2), bevorzugt in einem Bereich mit einem Radius (12) größer null gegenüber der Fahrzeugreifenachse (11) angeordnet ist.

## Claims

1. Method for operating a sensor (1) on or in a vehicle tyre (2), in particular an acceleration sensor (1), and in particular for detecting a tyre revolution duration (3) and/or a tyre contact duration (4), **characterized in that** the sensor (1) is operated with a first sampling rate in a first interval (5) of a tyre revolution and is operated with a second sampling rate in a second interval (6) of the tyre revolution.

2. Method according to Claim 1, **characterized in that** the duration of the first interval and/or second interval is set on the basis of a tyre revolution duration and/or a tyre contact duration.

3. Method according to one of the preceding claims, **characterized in that** the first interval (5) is longer than the second interval (6) and the second sampling rate is greater than the first sampling rate, the first sampling rate preferably being zero.

4. Method according to one of the preceding claims, **characterized in that** the sensor (1) is periodically operated with a period duration (7) which consists of the first and second intervals.

5. Method according to one of the preceding claims, **characterized in that** the first interval is shorter than the tyre revolution duration (3) minus the tyre contact duration (4) and the second interval is longer than the tyre contact duration (4), the period duration (7) substantially corresponding to the tyre revolution duration (4).

6. Method according to one of the preceding claims, **characterized in that** the sensor (1) is operated with a third sampling rate for the duration of a third interval before periodic operation with the period duration (7).

7. Method according to one of the preceding claims, **characterized in that** the third sampling rate is greater than the first sampling rate and less than the second sampling rate.

8. Method according to one of the preceding claims, **characterized in that** the third interval comprises at least one tyre revolution duration (3) and/or at least one tyre contact duration (4) and is preferably used to determine the tyre revolution duration (3) and/or the tyre contact duration (4).

9. Method according to one of the preceding claims, **characterized in that** the intervals with different sampling rates are predefined by a further sensor and/or by an energy converter.

10. Method according to one of the preceding claims, **characterized in that** a change in a force effect (8) on the sensor (1) and/or the duration between at least two force effect changes (9) is/are measured using the sensor (1), corresponding time values (20) preferably being stored.

11. Method according to one of the preceding claims, **characterized in that** a load on a vehicle is measured, a tread depth of the vehicle tyre is determined and/or a state of a road is determined.

12. Sensor arrangement (10) for carrying out a method according to one of the preceding claims, **characterized in that** the sensor arrangement (10) comprises a sensor (1), a counter and a storage unit, at least the sensor (1) being arranged in or on the vehicle tyre (2), preferably in a region with a radius (12) greater than zero with respect to the vehicle tyre axis (11).

## Revendications

1. Procédé de conduite d'un capteur (1) disposé sur ou dans un bandage (2) pour roue de véhicule, en particulier capteur d'accélération (1) notamment destiné à la détection de la durée de roulage (3) du bandage de roue et/ou la durée de service (4) du bandage de roue,
**caractérisé en ce que**
dans un premier intervalle de temps (5) de la durée de roulage du bandage de roue, le capteur (1) est conduit à un premier taux d'échantillonnage et
**en ce que** dans un deuxième intervalle de temps (6) de la durée de roulage du bandage de roue, le capteur est conduit à un deuxième taux d'échantillonnage.

2. Procédé selon la revendication 1, **caractérisé en ce que** la durée du premier ou du deuxième intervalle de temps est établie en fonction de la durée de roulage du bandage de roue et/ou de la durée de service du bandage de roue.

3. Procédé selon l'une des revendications précédentes, **caractérisé en ce que** le premier intervalle de temps (5) est supérieur au deuxième intervalle de temps (6) et **en ce que** le deuxième taux d'échantillonnage est supérieur au premier taux d'échantillonnage, le premier taux d'échantillonnage étant de préférence nul.

4. Procédé selon l'une des revendications précédentes, **caractérisé en ce que** le capteur (1) est conduit périodiquement à une période (7) qui est constituée du premier et du deuxième intervalle de temps.

5. Procédé selon l'une des revendications précédentes, **caractérisé en ce que** le premier intervalle de temps est inférieur à la durée de roulage (3) du bandage de roue déduite de la durée de service (4) du bandage de roue et **en ce que** le deuxième intervalle de temps est supérieur à la durée de service (4) du bandage de roue, la période (7) correspondant essentiellement à la durée de roulage (4) du bandage de roue.

6. Procédé selon l'une des revendications précédentes, **caractérisé en ce que** le capteur (1) est conduit à un troisième taux d'échantillonnage pendant la durée d'un troisième intervalle de temps qui précède la conduite périodique à une période (7).

7. Procédé selon l'une des revendications précédentes, **caractérisé en ce que** le troisième taux d'échantillonnage est supérieur au premier taux d'échantillonnage et inférieur au deuxième taux d'échantillonnage.

8. Procédé selon l'une des revendications précédentes, **caractérisé en ce que** le troisième intervalle de temps comporte au moins la durée de roulage (3) du bandage de roue et/ou au moins la durée de service (4) du bandage de roue et sert de préférence à déterminer la durée de roulage (3) du bandage de roue et/ou la durée de service (4) du bandage de roue.

9. Procédé selon l'une des revendications précédentes, **caractérisé en ce que** les intervalles de temps présentant différents taux d'échantillonnage sont prédéterminés par un autre capteur et/ou par un convertisseur d'énergie.

10. Procédé selon l'une des revendications précédentes, **caractérisé en ce qu'**une modification de l'action (8) d'une force sur le capteur (1) et/ou la durée qui s'écoule entre au moins deux modifications (9) de l'action de la force sont mesurées au moyen du capteur (1), les valeurs de temps (20) correspondantes étant de préférence conservées en mémoire.

11. Procédé selon l'une des revendications précédentes, **caractérisé en ce qu'**il mesure la charge du véhicule, **en ce qu'**il détermine la profondeur du profil du bandage de roue de véhicule et/ou **en ce qu'**il détermine l'état de la bande de roulement.

12. Ensemble (10) de capteur en vue de la mise en oeuvre d'un procédé selon l'une des revendications précédentes, **caractérisé en ce que** l'ensemble (10) de capteur comporte un capteur (1), un compteur et une unité de mémoire, au moins le capteur (1) étant disposé dans ou sur le bandage (2) pour roue de véhicule, de préférence dans une zone dont le rayon (12) par rapport à l'axe (11) du bandage pour roue de véhicule est supérieur à zéro.
